# DEMANDE DE BREVET EUROPEEN

(11) **EP 1 243 788 A1**
(43) Date de publication de la demande: **25.09.2002**
(21) Numéro de dépôt: 02290665.5
(22) Date de dépôt: 15.03.2002
(51) Int. Cl.: F02N 11/04, B60K 6/04

(54) **Groupe moto propulseur pour vehicule automobile**

(30) Priorité: 16.03.2001 FR 0103578
(71) Demandeur: Renault s.a.s., 92100 Boulogne Billancourt (FR)
(72) Inventeur: Engelhardt, Helmut, 92380 Garches (FR); Raoul, Michel, 78990 Elancourt (FR); Mercay, Patrice, 78170 La Celle Saint Cloud (FR)

(57) **Abrégé**

Groupe moto propulseur (10) de véhicule comportant un moteur thermique, une boîte de vitesses (200) accouplée au vilebrequin du moteur thermique par l'intermédiaire d'un embrayage, et une machine électrique (100) munie d'un stator (110 et d'un rotor (120), disposée entre l'embrayage et l'arbre d'entrée de la boîte de vitesses, caractérisé en ce que la machine électrique présente un flasque (111) fixé rigidement sur le carter d'embrayage (201) de la boîte de vitesses, et centré dans celui-ci, de manière à permettre un montage coaxial de la boîte de vitesses et de la machine électrique.

## Description

La présente invention se rapporte à un groupe moto propulseur pour véhicule automobile.

Pus particulièrement, elle a pour objet groupe moto propulseur comportant un moteur thermique, une boîte de vitesses accouplée au vilebrequin du moteur thermique par l'intermédiaire d'un embrayage, et une machine électrique munie d'un stator et d'un rotor, disposée entre l'embrayage et l'arbre d'entrée de la boîte de vitesses.

On connaît de nombreux exemples de groupe moto propulseur comportant une machine électrique interposée entre un arbre de sortie du moteur thermique et un organe d'entrée d'une transmission.

La publication US 5.001.412 décrit et représente un groupe moto propulseur comportant un moteur thermique dont un arbre de sortie, ou vilebrequin, porte un rotor cylindrique d'une machine électrique dont le stator est lié au bloc du moteur thermique. La machine électrique est susceptible de fonctionner indifféremment en générateur pour recharger une batterie d'accumulateurs ou en moteur électrique pour démarrer le moteur thermique, ou encore d'apporter un surcroît de puissance au moteur thermique, par exemple lors de fortes accélérations du véhicule. Une paroi transversale du rotor, opposée à la paroi qui est liée au vilebrequin du moteur thermique, est liée au vilebrequin du moteur thermique, et liée en rotation à une roue de turbine d'un convertisseur d'une transmission automatique du véhicule. Le rotor et le convertisseur sont supportés en porte-à-faux par le vilebrequin.

La publication FR 2 786 136D décrit également un groupe moto propulseur comportant un moteur thermique dont le vilebrequin porte un rotor cylindrique d'une machine électrique dont le stator est lié au bloc du moteur thermique. La machine électrique est susceptible de fonctionner indifféremment en générateur pour recharger une batterie d'accumulateurs, de fonctionner en moteur électrique pour démarrer la moteur thermique, ou d'apporter un surcroît de puissance au moteur thermique, par exemple lors de fortes accélérations du véhicule. Le stator supporte, par l'intermédiaire d'un palier, le rotor de la machine tournante, dont une reçoit la friction d'embrayage et le mécanisme de débrayage. L'ensemble rotor et mécanisme d'embrayage sont liés en rotation au vilebrequin, mais leur masse n'est plus supportée par celui-ci.

La publication DE 198 51 671 décrit un autre groupe moto propulseur comportant un moteur thermique et une boîte de vitesses de type longitudinal entre lesquels est interposée une machine électrique. Cette machine électrique est placée, soit entre le vilebrequin et le dispositif d'accouplement du moteur et de la boîte (de manière similaire aux deux publications précédentes), soit entre le dispositif d'accouplement et la boîte de vitesses. Dans ce cas, la machine électrique n'est pas coaxiale à l'arbre d'entrée de la boîte de vitesses. Cette disposition nécessite un support spécifique et un organe de liaison avec l'arbre d'entrée de la boîte de vitesses.

Pour remédier à cet inconvénient, l'invention propose que la machine électrique présente un flasque fixé rigidement sur le carter d'embrayage de la boîte de vitesses, et centré dans celui-ci.

Le flasque possède par exemple une première collerette dans sa périphérie, permettant de positionner et de soutenir le stator de la machine électrique, et une seconde collerette sur un rayon intermédiaire, permettant de positionner le rotor par rapport au stator et de le supporter par l'intermédiaire d'un palier.

L'invention trouve une application privilégiée, mais non limitative, sur un groupe moto propulseur de type disposé transversalement dans un véhicule.

De préférence, la boîte de vitesses est robotisée, et elle comporte au moins une descente d'engrenages utilisée pour transmettre le couple aux roues, aussi bien sur un rapport de marche avant que sur un rapport de marche arrière.

La machine électrique peut également être utilisée pour seconder les synchroniseurs dans le freinage ou la relance de l'arbre d'entrée de la boîte pour les changements de rapports, ou bien pour les déplacements du véhicule en marche arrière

D'autres caractéristiques et avantages de l'invention apparaîtront à la lecture de la description suivante d'un mode de réalisation particulier de l'invention, en liaison avec le dessin annexé, dont la figure unique représente de façon simplifiée une coupe transversale du groupe moto propulseur proposé.

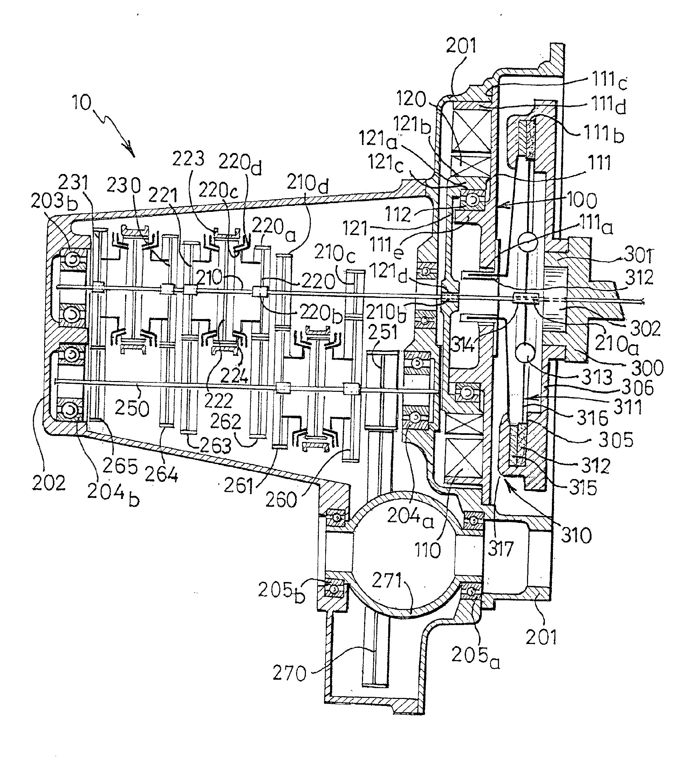

On voit sur la figure 1 l'ensemble 10 d'une machine électrique et d'une boîte de vitesses pour un groupe moto propulseur réalisé conformément à l'invention.

De manière connue, la machine électrique 100 comporte un stator 110 qui est fixé et centré dans le carter d'embrayage 201 de la boîte de vitesses 200 et un rotor 120 qui est lié en rotation à l'arbre d'entrée 210 de la boîte de vitesses.

De façon non limitative, l'arbre d'entrée 210 de la boîte de vitesses 200 est accouplé au moteur thermique représenté par l'embout de vilebrequin 300, par un embrayage 310 composé d'un disque 311 comportant à sa périphérie des faces de friction 312, des moyens de filtrage 313 et un moyeu central 314 assurant la liaison en rotation avec l'arbre d'entrée de la boite proprement dite. Les faces de friction s'appuient d'une part sur une piste 305 d'un volant rigide 306 fixé et centré directement sur le nez 301 du vilebrequin 300, et d'autre part sur le plateau de pression 315 du mécanisme d'embrayage. Ce plateau 315 permet le serrage ou la libération de la friction 312. Le serrage est obtenu par l'action du diaphragme élastique 316 contenu dans le couvercle du mécanisme d'embrayage 317 fixé sur le volant du moteur. L'ouverture et la fermeture de l'embrayage sont obtenues par le déplacement axial de la butée 318, elle-même commandée par un dispositif non représenté mais de préférence automatisé.

La butée de débrayage 318 prend appui sur le flasque 111 du stator de la machine électrique, s'étend dans l'espace central libre de la machine électrique, et est centré par l'évidement 111a du flasque du stator 110.

Ce flasque, de forme circulaire, est centré extérieurement sur son diamètre 111b. Il est positionné axialement sur la face 111c et est fixé rigidement dans le carter d'embrayage 201 par des moyens classiques. Le flasque 111 possède, en périphérie, une première collerette 111d de centrage et de maintien du stator 110, et une seconde collerette 111e supportant un palier de centrage 112, tel qu'un roulement, du rotor 120.

Le rotor 120 est fixé sur un flaque 121, comportant à sa périphérie une collerette 121a qui possède une surface extérieure cylindrique 121b supportant le rotor proprement dit de la machine électrique, et une surface intérieure 121c recevant le palier de centrage 112 par rapport au stator. Enfin le flasque 121 possède dans sa partie centrale des moyens de liaison en rotation 121d, par exemple des cannelures, avec l'arbre d'entrée 210 de la boîte de vitesses. Le poids total de la machine est supporté par le carter de la boîte de vitesses et ne perturbe donc pas l'arbre d'entrée de la boîte de vitesses.

La boîte de vitesses 200 est composée de deux carters, le carter d'embrayage 201 enfermant la machine électrique, le volant moteur et le dispositif d'accouplement, et le carter 202 contenant les mécanismes de la transmission. L'arbre d'entrée 210, supporté par les roulements 203a dans le carter d'embrayage et 203b dans le carter des mécanismes, comporte de droite à gauche, une première cannelure 210a de liaison avec la friction d'embrayage et une seconde cannelure 210b de liaison avec le rotor de la machine électrique dans la partie extérieure de la boîte proprement dite.

L'arbre d'entrée est centré et supporté par le vilebrequin 300 par l'intermédiaire du palier 302. A l'intérieur de la boîte, l'arbre 210 possède une première denture fixe 210c du rapport de première et une deuxième denture fixe 210d du rapport de deuxième. Vers la gauche du schéma, un premier groupe des deux rapports de troisième et de quatrième est composé d'un premier pignon fou 220 ayant une denture extérieure 220a, un fût de guidage 220b, une collerette conique 220c surmontée d'un flasque 220d de crabotage ; un second pignon fou 221 est constitué de la même manière. Entre ces deux pignons fous, est interposé un dispositif classique de synchronisation et de crabotage constitué d'un moyeu 222 lié rigidement à l'arbre d'entrée de la boîte, des synchroniseurs 224 et un manchon de crabotage 223.

Enfin, un deuxième groupe de deux rapports de cinquième 230 et de sixième 231, possède des moyens classiques de synchronisation et de crabotage similaires à ceux du groupe de troisième/quatrième. Ces pignons fixes ou fous portés par l'arbre primaire engrènent avec des pignons fous ou fixes portés par l'arbre secondaire 250 supporté dans le carter d'embrayage par les roulements 204a et dans le carter des mécanismes par le roulement 204b.

De droite à gauche, l'arbre secondaire 250 possède une première denture de pont 251, dont le rôle est de transmettre le couple à l'arbre de sortie de la boîte, un groupe de deux rapports de première 260 et de deuxième 261 disposant également de moyens de synchronisation et de crabotage adaptés, mais similaires à ceux du groupe de troisième/quatrième précédemment décrits.

L'arbre secondaire 250 porte également plusieurs pignons fixes, dans l'ordre, de troisième 262, de quatrième 263, de cinquième 264 et enfin de sixième 265. Enfin, le mouvement est transmis par le pignon 251 à une couronne de pont 270 portée par un boîtier de différentiel 271 représenté par une sphère. Le boîtier est supporté par les carters par l'intermédiaire des roulements 205a dans le carter d'embrayage et 205b dans le carter des mécanismes.

La boîte de vitesses possède donc six rapports de marche avant mais ne comporte pas de dispositif d'inversion de mouvement pour la marche arrière. Cette situation est rendue possible, d'une part, par le fait que les changements de rapport sont automatisés (automatisation de l'ouverture et de la fermeture de l'embrayage et déplacement des manchons de crabotage), et d'autre part par la présence d'une machine électrique placée en entrée de la boîte de vitesses et découplable du moteur thermique en même temps que cette dernière.

Lorsque la boîte est « robotisée », il est ainsi possible d'obtenir un rapport de marche arrière en mode électrique par la combinaison de l'ouverture de l'embrayage (découplage du moteur thermique) , de l'engagement du rapport de première et de l'inversion du mouvement de rotation habituel de l'arbre d'entrée de la boîte de vitesses. Le moteur thermique peut être en marche ou à l'arrêt.

La machine électrique peut aussi être utilisée pour démarrer le moteur thermique. En effet l'invention permet de tirer profit de la robotisation de la boîte pour n'autoriser le démarrage du moteur que sous condition d'avoir la boîte de vitesses en position neutre (ou point mort) et l'embrayage fermé.

Conformément à l'invention, la machine électrique peut aussi être utilisée pour fournir l'énergie électrique nécessaire au fonctionnement des différents accessoires et pour recharger les batteries du véhicule.

En situation de véhicule roulant, la machine électrique peut être couplée au moteur thermique, tandis qu'en en situation de véhicule arrêté, mais moteur tournant, la robotisation de la boîte de vitesses peut prévoir la mise au neutre de celle-ci et la fermeture de l'embrayage.

Sans sortir du cadre de l'invention, la machine électrique peut encore être utilisée, soit pour fournir un appoint de couple pour seconder le moteur thermique et permettre une plus forte accélération du véhicule, soit en phase de freinage pour accroître la capacité de freinage du moteur et récupérer une partie de l'énergie cinétique du véhicule.

Enfin, la disposition de la machine électrique à l'entrée de la boîte de vitesses, permet avantageusement de seconder les synchroniseurs dans le freinage ou la relance de l'arbre d'entrée de la boîte pour les changements de rapports.

## Revendications

1. Groupe moto propulseur (10) de véhicule comportant un moteur thermique, une boîte de vitesses (200) accouplée au vilebrequin du moteur thermique par l'intermédiaire d'un embrayage, et une machine électrique (100) munie d'un stator (110) et d'un rotor (120), disposée entre l'embrayage et l'arbre d'entrée de la boîte de vitesses, **caractérisé en ce que** la machine électrique présente un premier flasque (111) fixé rigidement sur le carter d'embrayage (201) de la boîte de vitesses, et centré dans celui-ci, de manière à permettre un montage coaxial de la boîte de vitesses et de la machine électrique, **en ce que** le rotor (120) comporte un second flasque (121) lié en rotation à l'arbre primaire de la boite de vitesses (200).

2. Groupe moto propulseur selon la revendication 1, **caractérisée en ce que** le flasque (111) possède une première collerette (111d) dans sa périphérie, permettant de positionner et soutenir le stator (110) de la machine électrique.

3. Groupe moto propulseur selon la revendication 1 ou 2, **caractérisée en ce que** le flasque (111) possède une deuxième collerette (111e) sur un rayon intermédiaire, permettant de positionner le rotor (120) par rapport au stator (110), et de le supporter par l'intermédiaire d'un palier (122).

4. Groupe moto propulseur selon la revendications 1, 2 ou 3, **caractérisée en ce que** le flasque (111) possède un évidement central (111a) permettant le centrage d'une butée de débrayage (318) dans le stator (110).

5. Groupe moto propulseur selon l'une des revendications précédentes, **caractérisé en ce que** la butée de débrayage (318) prend appui sur la face avant du flasque (111).

6. Groupe moto propulseur selon l'une des revendications précédentes, **caractérisé en ce que** la boîte de vitesses est robotisée, et **en ce qu'**elle comporte au moins une descente de pignons transmettant le couple sur au moins un rapport de marche avant et un rapport de marche arrière.

7. Groupe moto propulseur selon la revendication 6, **caractérisé en ce que** la machine électrique est utilisée pour seconder les synchroniseurs dans le freinage ou la relance de l'arbre d'entrée de la boîte pour les changements de rapports.

8. Groupe moto propulseur selon l'une des revendications précédentes, **caractérisé en ce que** la machine électrique est utilisée pour des déplacements du véhicule en marche arrière.

9. Groupe moto propulseur selon l'une des revendications 6, 7, ou 8, **caractérisé en ce que** le découplage du moteur thermique en marche arrière est assuré par les moyens de robotisation de la boîte de vitesses.

10. Groupe moto propulseur selon l'une des revendications 6 à 9, **caractérisée en ce que** l'engagement du premier rapport de marche avant est assuré par les moyens de robotisation de la boîte de vitesses.
